Europäisches Patentamt

European Patent Office

Office européen des brevets

(11) Veröffentlichungsnummer : **0 115 562**
**B1**

(12) **EUROPÄISCHE PATENTSCHRIFT**

(45) Veröffentlichungstag der Patentschrift :
16.04.86

(51) Int. Cl.⁴ : **A 61 C 5/06**

(21) Anmeldenummer : 83106110.6

(22) Anmeldetag : 22.06.83

(54) **Verfahren zum Mischen einer flüssigen und einer pulverförmigen Komponente, insbesondere für Dentalzwecke, sowie Mischkapsel und Portionspackung zur Durchführung dieses Verfahrens.**

(30) Priorität : 04.02.83 DE 3303838

(43) Veröffentlichungstag der Anmeldung :
15.08.84 Patentblatt 84/33

(45) Bekanntmachung des Hinweises auf die Patenterteilung : 16.04.86 Patentblatt 86/16

(84) Benannte Vertragsstaaten :
AT BE CH DE FR GB IT LI NL SE

(56) Entgegenhaltungen :
EP-A- 0 043 468
DE-A- 1 566 557
DE-A- 1 960 074
DE-A- 2 831 005
FR-A- 1 144 883
US-A- 3 454 177
US-A- 4 182 447

(73) Patentinhaber : Mühlbauer, Ernst
Fangdieckstrasse 61
D-2000 Hamburg 53 (DE)

(72) Erfinder : Mühlbauer, Ernst
Fangdieckstrasse 61
D-2000 Hamburg 53 (DE)

(74) Vertreter : Glawe, Delfs, Moll & Partner Patentanwälte
Postfach 26 01 62 Liebherrstrasse 20
D-8000 München 26 (DE)

**Beschreibung**

Die Erfindung bezieht sich auf ein Verfahren zum Mischen einer flüssigen und einer pulverförmigen Komponente durch Vibration einer die Komponenten enthaltenden Mischkammer, insbesondere für Dentalzwecke, bei dem die flüssige Komponente dicht eingeschlossen in einen Folienbeutel in die Mischkammer gebracht und der Mischvibration ausgesetzt wird, wobei die Stärke des Folienbeutels so bemessen ist, daß er unter der Einwirkung der Mischvibration seinen Inhalt freigibt.

Es ist eine Mehrkomponentenkapsel für Dentalzwecke bekannt (DE-A-28 31 005), in deren Mischraum eine Komponente frei enthalten ist, während die andere Komponente in einem Folienbeutel eingeschweißt ist und dadurch von der anderen Komponente getrennt ist, bis der Folienbeutel durch die Mischvibration zerstört wird. Offensichtlich genügt es, lediglich eine Komponente in einem Beutel einzuschließen, um die chemische Trennung während der Lagerzeit zu sichern. Die Verwendung der Mehrkomponentenkapsel zur Aufbewahrung und zur einmaligen Mischung bedeutet einen gewissen Aufwand.

Es ist auch bekannt, daß der Zahnarzt in eine mehrfach zu verwendende Mischkapsel Silberfeilung sowie aus einem Dosiergerät eine entsprechende Menge Quecksilber gibt, die Kapsel verschließt und die Komponenten anschließend im Vibrationsgerät mischt. Zwar ist dies Verfahren billiger, aber es ergeben sich leichter Ungenauigkeiten als bei der maschinellen Vordosierung, und der Arzt ist der unmittelbaren Wirkung des Quecksilbers ausgesetzt.

Der Erfindung liegt die Aufgabe zugrunde, die von der Verwendung von Einwegkapseln bekannte Einfachheit des Verfahrens zu verbinden mit dem geringen Aufwand der mehrfachen Kapselverwendung.

Die erfindungsgemäße Lösung besteht darin, daß auch die pulverförmige Komponente eingeschlossen in einem sich unter der Einwirkung der Mischvibration öffnenden, gesonderten Folienbeutel der Vibration ausgesetzt wird, der aus einem spezifisch mehrfach leichteren Werkstoff als die pulverförmige Komponente besteht.

Die Einschließung beider Komponenten in je einen Folienbeutel erlaubt ihre beliebige Verwendung, unabhängig davon, ob sie von vornherein in einer Einwegkapsel geliefert oder erst beim Zahnarzt in eine ggf. mehrfach zu verwendende Mischkapsel eingelegt werden. Sie erlauben auch eine leichte und einfache Dosierung, indem in eine Mischkapsel jeweils eine solche Zahl von Folienbeuteln der Komponenten eingelegt werden, wie es der gewünschten Amalgammenge entspricht.

Es konnte nicht erwartet werden, daß Pulver sich aus einem unter der Mischvibration sich öffnenden Folienbeutel hinreichend vollständig befreien würde. Offenbar kann dies nicht einmal von der flüssigen Komponente unter bestimmten Bedingungen erwartet werden ; denn es gilt die Erfahrung, daß Quecksilber aus einem versiegelten Metallfolienbeutel unter Umständen nicht vollständig herauskommt (US-A-4 182 447, Spalte 10 oben). Wenn nicht einmal bei Flüssigkeiten unter bestimmten Umständen die vollständige Entleerung des Folienbeutels gewährleistet zu sein scheint, konnte man diese um so weniger bei der Aufbewahrung eines Pulvers im Folienbeutel erwarten. Um so überraschender ist es, daß die vollständige Entleerung der pulverförmigen Komponente dann gelingt, wenn gemäß der Erfindung das spezifische Gewicht des Beutelwerkstoffs mehrfach geringer ist als dasjenige des Pulvers. Man darf annehmen, daß dieser Effekt darauf zurückzuführen ist, daß nach dem Gesetz Kraft gleich Masse mal Beschleunigung die unter den heftigen Vibrationsbeschleunigungen auf die in der Kapsel enthaltenen Stoffe ausgeübten Kräfte bei dem spezifisch leichten Beutelmaterial wesentlich geringer als bei den Pulverpartikeln sind, so daß diese durch die sehr unterschiedlichen auf sie einwirkenden Kräfte voneinander gesondert werden. — Es mag auch der Umstand eine Rolle spielen, daß das Pulver sich unter Vibrationsbedingungen nicht wie ein Feststoff, sondern flüssigkeitsähnlich verhält. Dies liegt daran, daß die Pulverpartikeln in Relativbewegung zueinander geraten und dadurch Luftschichten zwischen sie eingeschlossen werden, die den Festkörperverband aufheben und das Pulver insgesamt in einen sog. fluidisierten Zustand versetzen, der auf einem anderen Fachgebiet, nämlich demjenigen der Fördertechnik für pulverförmiges Gut, bekannt ist und genutzt wird.

Durch Versuch läßt sich leicht ermitteln, wievielfach das Pulver spezifisch schwerer sein muß als der Beutelwerkstoff. Es soll ein Dichteverhältnis, bezogen auf den massiven Pulverwerkstoff, von mindestens etwa 5 angestrebt werden. Bevorzugt wird ein Verhältnis von mehr als 8.

Die Erfindung bezieht sich ferner auf eine Mischkapsel zur Durchführung des angegebenen Verfahrens, sie zum Vibrationsmischen mehrerer darin enthaltener Komponenten, insbesondere für Dentalzwecke, die in einem Mischraum eine flüssige Komponente dicht eingeschlossen in einem diese unter der Einwirkung der Mischvibration freigebenden Folienbeutel sowie eine pulverförmige Komponente enthält. Sie zeichnet sich dadurch aus, daß auf die pulverförmige Komponente in einem sich unter der Einwirkung der Mischvibration öffnenden, gesonderten Folienbeutel enthalten ist, der aus einem spezifisch mehrfach leichteren Werkstoff als die pulverförmige Komponente besteht.

Schließlich bezieht sich die Erfindung auf eine Portionspackung für Silverpulver oder dergleichen pulverförmiges Dentalmaterial, das zum Vibrationsmischen in einer Dentalmischkapsel bestimmt ist. Diese Packung zeichnet sich dadurch aus, daß das — ggf. brikettierte — Pulver in einen Folienbeutel eingeschlossen ist, dessen Material mehrfach spezifisch leichter als das Pulver ist und dessen Stärke so bemessen ist, daß er sich unter der Einwirkung der Mischvibration im Mischraum der Dentalmischkapsel öffnet.

In diesem Zusammenhang können sowohl die Mischkapsel als auch die Vibrationsmischgeräte, die für Dentalzwecke verwendet werden, als bekannt vorausgesetzt werden. Die Mischkapseln sind längliche, durch einen abnehmbaren Deckel verschlossene Behälter mit einer Länge in der Größenordnung von 3 und einem Durchmesser in der Größenordnung von 1 cm. Die Mischgeräte sind so ausgebildet, daß die darin eingespannten Mischkapseln in ihrer Längsrichtung mit einer Frequenz von beispielsweise 300 Hz hin- und herbewegt werden können, so daß das im Innenraum der Kapsel (Mischraum) enthaltene Gut zwischen den Endwänden des Mischraums hin- und hergeschleudert wird. Das Volumen des Guts macht nur einen sehr geringen Teil des Mischraumvolumens aus. Typische Amalgamportionen, wie sie vom Zahnarzt in einem Mischvorgang zubereitet werden, liegen zwischen 0,5 g und 1 g.

Als Folienmaterial eignen sich vornehmlich Kunststoffe, beispielsweise eine Folie von 0,05 mm Dicke aus Polyäthylen.

Die Einschließung des Pulvers, insbesondere des Silberpulvers, in einen Folienbeutel hat den großen Vorteil, daß die Portionsgröße mit großer Genauigkeit vorherbestimmt werden kann. Dieser Vorteil ist auch dann vorhanden, wenn das Pulver in brikettierter Form vorliegt. Es ist nämlich bekannt, dem Zahnarzt das Silberpulver in Form von gepreßten Tabletten zur Verfügung zu stellen, die unter der Einwirkung der Mischvibration zu Pulver zerfallen und die fabrikationsmäßig auf eine bestimmte Gewichtsportion eingestellt sind. Da diese Tabletten während des Transports und bei der Verwendung, beispielsweise beim Herausnehmen einzelner Tabletten, sich aneinander reiben, tritt durch Abrieb ein ständiger Gewichtsverlust ein, der zu einer Verfälschung der Gewichtsverhältnisse bei der Amalgambereitung führen kann. Dieser Abriebverlust wird durch die Einschließung des Silbers in Folienbeutel verhindert.

Nach einem weiteren Merkmal der Erfindung können zusammengehörige Portionspackungen der Dentalmaterialkomponenten miteinander verbunden sein. Dies hat nicht nur den Vorteil, daß die Verwendung vereinfacht wird, weil jeweils nur eine Portionspackung mit beiden Komponenten in die Mischkapsel getan zu werden braucht, sondern auch die Portionierung wird zuverlässiger, weil bei der Zuordnung zueinander passender Komponentenmengen keine Fehler auftreten können. Selbstverständlich können auch mehrere Portionspackungen auf einmal in die Mischkapsel gegeben werden, wenn beispielsweise für eine große Füllung eine Amalgammenge benötigt wird, die doppelt so groß ist wie die von einer Portionspackung zur Verfügung gestellte Amalgammenge.

Die Verbindung der beiden einzelnen Portionspackungen zu einer gemeinsamen Portionspackung kann auf einfache Weise beispielsweise durch Verklebung erzielt werden. Nach einem anderen Merkmal der Erfindung wird die Verbindung zwischen den einzelnen Portionspackungen dadurch hergestellt, daß mindestens eine Folie an der Bildung beider Portionspackungen beteiligt ist. Vorzugsweise werden sogar die beiden Portionspackungen einstückig von einem Paar von Folien gebildet, die unter Bildung von zwei getrennten Portionstaschen miteinander verschweißt sind.

Gemäß einer anderen Ausführungsform der Erfindung sind zwei Deckfolien mit einer Mittelfolie unter Bildung von zwei beiderseits der Mittelfolie gelegenen Portionstaschen verschweißt.

Es können Einrichtungen vorgesehen sein, die das Öffnen der Folien unter der Wirkung der Mischvibration und/oder den Mischeffekt verbessern, beispielsweise ein Pistill, das auch in der Portionspackung enthalten sein kann, oder von der Wandung des Mischraums nach innen vorstehende Kante oder Spitzen.

Es ist nicht erforderlich, daß die beiden Komponentenbeutel erst beim Zahnarzt unmittelbar vor der Verwendung in eine Mischkapsel gegeben werden, vielmehr ergibt die Erfindung auch den Vorteil, daß bei der Herstellung von Einwegkapseln die Füllung der Kapseln unabhängig von der Dosierung und Einhüllung der Komponenten wird. Schließlich ergibt sich der Vorteil, daß es nicht erforderlich ist, die Kapsel dicht zu verschließen, auch wenn diese zu langzeitiger Aufbewahrung vorgesehen ist, weil die Komponenten in ihrer Beutelpackung hinreichend dicht von atmosphärischen Einflüssen abgeschlossen werden können bzw. verhütet werden kann, daß sie durch Verdampfung giftige Einflüsse in die umgebende Atmosphäre senden.

Die Folienpackungen können bedruckt werden, und zwar mit arzneimittelrechtlich erforderlichen Angaben, z. B. Herstellername, Gewicht, Verfallzeit, Abfülldatum, Materialangaben etc. Die einzelnen Folienpackungen können als Doppelpackungen oder einzeln innerhalb eines Bands gleichartiger Packungen aufgereiht sein und durch Perforation bzw. Sollbruchstellen voneinander und ggf. von den die Informationen tragenden Bandabschnitten abtrennbar sein.

Die Erfindung ergibt wesentliche Preisvorteile gegenüber bekannten Einwegkapseln, die zumeist auch noch durch Drehen, Drücken oder Schrauben zur Mischung vorbereitet werden müssen. Die Einhüllung des Amalgampulvers in Folienbeutel kann auch Vorteile gegenüber der Verarbeitung in Form von Tabletten haben, weil diese erst gepreßt werden müssen, was mit Kosten verbunden ist. Außerdem kann es für manches Amalgampulver nachteilig sein, zu Tabletten gepreßt zu werden. Schließlich können sich beim Abrieb der Tabletten Gewichtsunterschiede ergeben. Gegenüber der Verwendung automatischer Mischgeräte ergibt die Erfindung den Vorteil größerer Genauigkeit, daß Amalgame jeder Art verwendet werden können, daß die Pflege der Geräte entfällt und daß der Arzt nicht dem Quecksilberdampf ausgesetzt ist.

Dadurch daß die pulverförmige Komponente durch die Verpackung in einem Folienbeutel zu einer Einheit zusammengefaßt ist, wird die Zerstörung der die flüssige Komponente enthaltenden Folienbeutel erleichtert, weil die gesamte Pulvermasse im wesentlichen gleichzeitig auf den Flüssigkeitsbeutel aufschläge und damit eine stärkere Wirkung ausübt als im ganzen Raum verteiltes Pulver.

Die Portionspackung der zu mischenden Komponenten kann an einem beliebigen Punkt der Kette zwischen Herstellung, Lagerung und Verwendung in die Mischkapsel gebracht werden.

Die Erfindung wird im folgenden näher unter Bezugnahme auf die Zeichnung erläutert, die vorteilhafte Ausführungsbeispiele der Erfindung schematisch veranschaulicht. Darin zeigen :

Figur 1 einen Längsschnitt durch eine Mischkapsel in etwa natürlicher Größe,

Figur 2 eine Portionspackung mit zwei durch Klebung verbundenen Einzelportionspackungen,

Figur 3 und 4 eine Seitenansicht und Draufsicht auf eine einstückig verbundene Portionspackung,

Figur 5 eine weitere Ausführungsform,

Figur 6 einen Verpackungsstreifen, der mehrere Doppelportionspackungen voneinander trennbar umfaßt,

Figur 7 eine vierte Ausführungsform und

Figur 8 eine fünfte Ausführungsform der erfindungsgemäßen Portionspackung, jeweils in vergrößertem Maßstab.

Die Mischkapsel 1 besteht aus einem Behälterteil 2 und einem darauf passend angeordneten entfernbaren und ggf. wieder schließbaren Deckel 3, die gemeinsam den Mischraum 4 einschließen, in welchem sich eine Portionspackung 5 befindet, die je eine Portionstasche für zusammen passende Mengen von Quecksilber und Silberpulver enthält. Durch Vibration der Kapsel in einem nicht dargestellten Mischgerät in Pfeilrichtung 6 wird die Portionspackung 5 abwechselnd zum heftigen Aufprall auf den beiden Stirnflächen des Mischraums 4 gebracht, wobei die Verpackungshülle aufreißt, den Inhalt freigibt, woraufhin die Mischung der Komponenten stattfinden kann. Zwecks Erleichterung des Aufreißens und ggf. auch des Mischens weist eine Stirnfläche bei 7 eine in den Mischraum hineinragende Spitze auf.

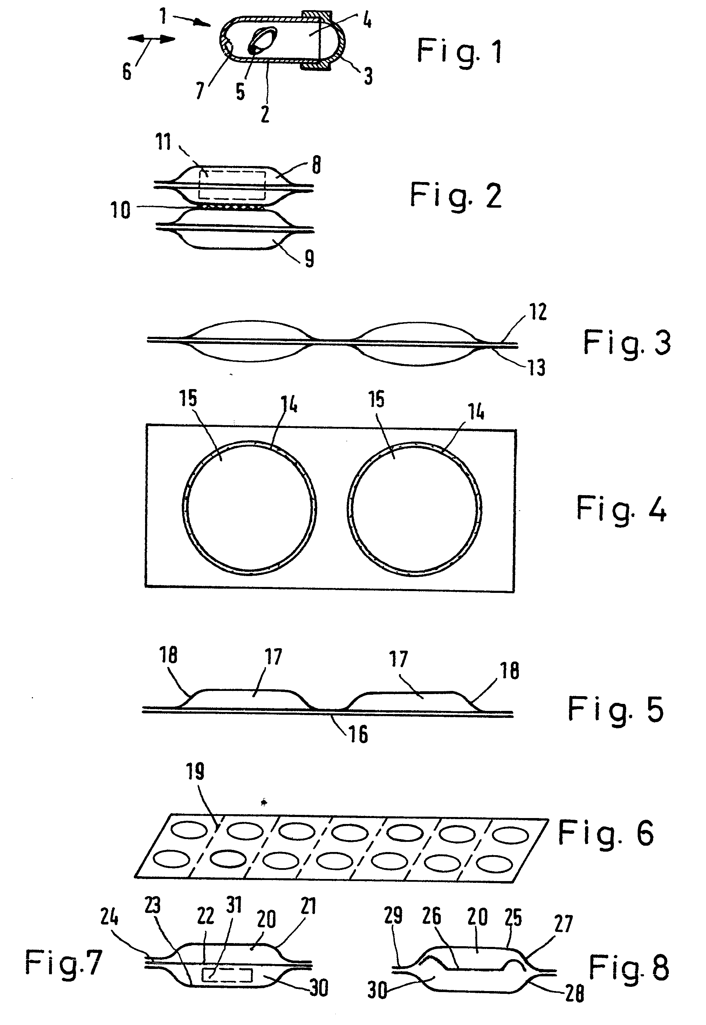

Gemäß Fig. 2 besteht die Portionspackung aus zwei Einzelpackungen 8, 9 für Silber bzw. Quecksilber, die durch Klebung 10 miteinander verbunden sind. Das Silberpulver kann pulverförmig darin enthalten sein oder auch, wie bei 11 gestrichelt angedeutet, in Form einer brikettierten Tablette.

Die Portionspackung gemäß Fig. 3, 4 besteht aus zwei Folien 12, 13, die in geschlossenen Kreisen 14 zur Bildung dichter Portionspackungen 15 zur Aufnahme des Silberpulvers bzw. des Quecksilbers oder anderer Dentalwerkstoffe miteinander verschweißt sind.

Bei der Ausführungsform gemäß Fig. 5 ist nur eine Folie 16 durchgehend gestaltet, während die Portionstaschen 17 darauf durch einzeln ausgeschnittene Folienstücke 18 und eine der Fig. 4 entsprechende Verschweißung gebildet sind.

Die Portionspackungen gemäß Fig. 3 bis 5 können in Form von Verpackungsstreifen gemäß Fig. 6 vorrätig gehalten werden, wobei die Portionspackungen, von denen jede wieder aus zwei Einzelpackungen für die beiden Komponenten besteht, mittels einer Perforation 19 voneinander leicht abtrennbar sind.

Bei der Ausführungsform gemäß Fig. 7 sind zwei Deckfolien 21, 23 im Bereich 24 umlaufend dicht mit einer mittleren Folie 22 verschweißt unter Bildung von zwei Portionstaschen 20, 30. Mindestens zwei der drei Folien sind so ausgebildet, daß sie unter der Einwirkung der Mischvibration zerstört werden und den Inhalt freigeben. In Fig. 7 ist auch angedeutet, daß die Portionspackung ein Pistill 31 enthalten kann, beispielsweise ein inertes Kunststoff- oder Glasstück in einer der Portionstaschen.

Eine der Ausführungsform gemäß Fig. 7 ähnliche Ausführungsform zeigt Fig. 8 mit dem Unterschied, daß die Mittelfolie 26 gesondert mit der Deckfolie 25 bei 27 verschweißt ist, während die andere Deckfolie 28 gesondert bei 29 mit der Deckfolie 25 verschweißt ist. Alle Schweißnähte sind umlaufend ausgeführt, so daß die Taschen 20, 30 vollständig geschlossen sind.

Selbstverständlich können auch die Portionspackungen gemäß Fig. 2 oder 7 oder 8 in einer Mehrzahl abreißbar in Verpackungsstreifen gemäß Fig. 6 zusammengefaßt sein.

Es ist selbstverständlich nicht erforderlich, daß bei jeder Portionspackung sämtliche an ihrer Bildung beteiligten Folien unter der Einwirkung der Mischvibration zerstörbar sind ; vielmehr genügt es, wenn jeweils eine an der Bildung jeder Portionstasche beteiligte Folie zerstörbar ist. In vielen Fällen genügt es auch, wenn nur eine dieser Folien spezifisch mehrfach leichter als die Pulverkomponente ist, obwohl zweckmäßigerweise beide an der Bildung der zur Aufnahme des Pulvers vorgesehen Portionstasche beteiligten Folien dieser Bedingung genügen sollten.

**Patentansprüche**

1. Verfahren zum Mischen einer flüssigen und einer pulverförmigen Komponente durch Vibration einer die Komponenten enthaltenden Mischkammer, insbesondere für Dentalzwecke, bei dem die flüssige Komponente dicht eingeschlossen in einen Folienbeutel in die Mischkammer gebracht und der Mischvibration ausgesetzt wird, wobei die Stärke des Folienbeutels so bemessen ist, daß er unter der Einwirkung der Mischvibration seinen Inhalt freigibt, dadurch gekennzeichnet, daß auch die pulverförmige Komponente eingeschlossen in einem sich unter der Einwirkung der Mischvibration öffnenden, gesonderten Folienbeutel der Vibration ausgesetzt wird, der aus einem spezifisch mehrfach leichteren Werkstoff als die pulverförmige Komponente besteht.

2. Mischkapsel zum Vibrationsmischen mehrerer darin enthaltener Komponenten, insbesondere für Dentalzwecke, die in einem Mischraum (4) eine flüssige Komponente dicht eingeschlossen in einem diese unter der Einwirkung der Mischvibration freigebenden Folienbeutel (8, 9, 15, 17, 20, 30) sowie eine pulverförmige Komponente enthält, dadurch gekennzeichnet, daß auch die pulverförmige Komponente in einem sich unter der Einwirkung der Mischvibration öffnenden, gesonderten Folienbeutel (8, 9, 15, 17, 20, 30) enthalten ist, der aus einem spezifisch mehrfach leichteren Werkstoff als die pulverförmige Komponente besteht.

3. Portionspackung für Silberpulver oder dergleichen pulverförmiges Dentalmaterial, das zum Vibrationsmischen in einer Dentalmischkapsel (1) bestimmt ist, dadurch gekennzeichnet, daß das — ggf. brikettierte — Pulver in einen Folienbeutel (5, 8, 9, 15, 17, 20, 30) eingeschlossen ist, dessen Material mehrfach spezifisch leichter als das Pulver ist und dessen Stärke so bemessen ist, daß er sich unter der Einwirkung der Mischvibration im Mischraum öffnet.

4. Portionspackung nach Anspruch 3, dadurch gekennzeichnet, daß sie mit einer Portionspackung für die zugehörige Menge Quecksilber bzw. der anderen Dentalmaterialkomponente verbunden ist.

5. Portionspackung nach Anspruch 4, dadurch gekennzeichnet, daß die beiden gesonderten Portionspackungen (8, 9) miteinander verklebt sind.

6. Portionspackung nach Anspruch 4, dadurch gekennzeichnet, daß mindestens eine Folie (12, 13, 16) an der Bildung beider gesonderten Portionspackungen (15, 17) beteiligt ist.

7. Portionspackung nach Anspruch 6, dadurch gekennzeichnet, daß die beiden Portionspackungen (15) einstückig von einem Paar unter Bildung von zwei getrennten Portionstaschen (15) miteinander verschweißten Folien (12, 13) gebildet sind.

8. Portionspackung nach Anspruch 6, dadurch gekennzeichnet, daß zwei Deckfolien (21, 23, 25, 28) mit einer Mittelfolie (22, 26) unter Bildung von zwei beiderseits der Mittelfolie gelegenen Portionstaschen (20, 30) verschweißt sind.

9. Portionspackung nach einem der Ansprüche 3 bis 8, dadurch gekennzeichnet, daß sie ein Pistill (31) enthält.

10. Mischkapsel nach Anspruch 2, dadurch gekennzeichnet, daß die Wandung des Mischraums (4) mit wenigstens einer nach innen vorstehenden Kante oder Spitze (7) versehen ist.

## Claims

1. A method of mixing a liquid component and a powdered component by vibrating a mixing chamber containing one of the components, in particular for dental use, wherein the liquid component fluid-tightly enclosed in a film blister is placed in the mixing chamber and is subjected to mixing vibration, the thickness of the film blister being of such dimensions that it releases its contents under the action of the mixing vibration, characterised in that the powdered component enclosed in a separate film blister, which opens under the influence of the mixing vibration, is also subjected to vibration, the blister consisting of a material specifically lighter by several times than the powdered component.

2. A mixing capsule for the vibration mixing of components contained therein, in particular for dental use, which in a mixing chamber (4) contains a liquid component fluid-tightly enclosed in a film blister (8, 9, 15, 17, 20, 30) releasing said component under the influence of the mixing vibration, and which also contains a powdered component, characterised in that the powdered component is also contained in a separate film blister (8, 9, 15, 17, 20, 30) which opens under the influence of the mixing vibration and which consists of a material specifically lighter by several times than the powdered component.

3. A single dose sachet for silver powder or similar powdered dental material which is intended to undergo vibration mixing in a dental mixing capsule (1), characterised in that the powder, optionally briquetted, is enclosed in a film blister (5, 8, 9, 15, 17, 20, 30), the material of the latter being several times specifically lighter than the powder and the thickness of which is of such dimensions that it opens in the mixing chamber under the influence of the mixing vibration.

4. A single dose sachet according to claim 3, characterised in that it is joined to another single dose sachet for the appropriate amount of mercury or other dental material component.

5. A single dose sachet according to claim 4, characterised in that the two separate single dose sachets (8, 9) are adhered to one another.

6. A single dose sachet according to claim 4, characterised in that at least one film (12, 13, 16) cooperates in the formation of two separate single dose sachets (15, 17).

7. A single dose sachet according to claim 6, characterised in that the two single dose sachets (15) are formed integrally from a pair of films (12, 13) welded together to form two separate single dose sachets (15).

8. A single dose sachet according to claim 6, characterised in that two covering films (21, 23, 25, 28) are welded to a central film (22, 26) to form two individual pockets (20, 30) situated on either side of the central film.

9. A single dose sachet according to any of claims 3 to 8, characterised in that it contains a pestle (31).

10. A mixing capsule according to claim 2, characterised in that the wall of the mixing chamber (4) is provided with at least one inwardly projecting edge or point (7).

## Revendications

1. Procédé de mélange d'un composant liquide et d'un composant pulvérulent par vibrage d'une chambre de mélange qui contient l'un des composants, applicable en particulier en dentisterie, le composant liquide étant introduit dans la chambre de mélange à l'état hermétiquement inclus dans un sachet de plastique, l'épaisseur du sachet de plastique étant dimensionnée de telle manière qu'il libère son contenu sous l'effet du vibrage du mélange, caractérisé en ce que le composant pulvérulent est exposé au vibrage alors qu'il est également contenu dans un sachet de plastique séparé qui s'ouvre sous l'effet du vibrage du mélange et qui est fait d'un matériau dont le poids spécifique est plusieurs fois inférieur à celui du composant pulvérulent.

2. Capsule de mélange pour le mélange par vibrage de plusieurs composants qui y sont contenus, utilisable en particulier en dentisterie, contenant, dans une chambre de mélange (4), un composant liquide hermétiquement inclus dans un sachet de plastique (8, 9, 15, 17) qui le libère sous l'effet du vibrage du mélange, ainsi qu'un composant pulvérulent, caractérisée en ce que le composant pulvérulent est contenu lui aussi dans un sachet de plastique séparé (8, 9, 15, 17, 20, 30) qui s'ouvre sous l'effet du vibrage du mélange et qui est fait d'un matériau dont le poids spécifique est plusieurs fois inférieur à celui du composant pulvérulent.

3. Cartouche dosée pour poudre d'argent ou matière pulvérulente similaire de dentisterie qui est destinée à être mélangée par vibrage dans une capsule de mélange de dentisterie (1), caractérisée en ce que la poudre — éventuellement agglomérée — est incluse dans un sachet de plastique (5, 8, 9, 15, 17, 20, 30) dont le matériau a un poids spécifique plusieurs fois inférieur à celui de la poudre et dont l'épaisseur est dimensionnée de telle manière qu'il s'ouvre dans la chambre de mélange sous l'effet du vibrage du mélange.

4. Capsule dosée selon la revendication 3, caractérisée en ce qu'elle est unie à une capsule dosée pour la quantité correspondante de mercure ou de l'autre composant de la matière de dentisterie.

5. Capsule dosée selon la revendication 4, caractérisée en ce que les deux capsules dosées séparées (8, 9) sont collées l'une à l'autre.

6. Capsule dosée selon la revendication 4, caractérisée en ce qu'au moins une feuille de plastique (12, 13, 16) participe à la liaison des deux capsules dosées séparées (15, 17).

7. Capsule dosée selon la revendication 6, caractérisée en ce les deux capsules dosées (15) sont formées d'une seule pièce par une paire de feuilles de plastique (12, 13) soudées l'une à l'autre de manière à former deux poches dosées séparées (15).

8. Capsule dosée selon la revendication 6, caractérisée en ce que deux feuilles de plastique de recouvrement (21, 23, 25, 28) sont soudées à une feuille de plastique médiane (22, 26) de manière à former deux poches dosées (20, 30) situées de part et d'autre de la feuille de plastique médiane.

9. Capsule dosée selon l'une quelconque des revendications 3 à 8, caractérisée en ce qu'elle contient un pilon (31).

10. Capsule de mélange selon la revendication 2, caractérisée en ce que la paroi de la chambre de mélange (4) est munie d'au moins une arête ou points (7) en saillie vers l'intérieur.

Fig. 1

Fig. 2

Fig. 3

Fig. 4

Fig. 5

Fig. 6

Fig. 7

Fig. 8